Europäisches Patentamt

European Patent Office

Office européen des brevets

(11) Veröffentlichungsnummer: **0 113 379**
**B1**

(12) **EUROPÄISCHE PATENTSCHRIFT**

(45) Veröffentlichungstag der Patentschrift: **30.09.87**

(21) Anmeldenummer: **82111540.9**

(22) Anmeldetag: **13.12.82**

(54) **Rechnerkopplung.**

(43) Veröffentlichungstag der Anmeldung:
**18.07.84 Patentblatt 84/29**

(51) Int. Cl.⁴: **G 06 F 13/00**, G 06 F 15/16,
G 05 B 19/403

(45) Bekanntmachung des Hinweises auf die
Patenterteilung:
**30.09.87 Patentblatt 87/40**

(84) Benannte Vertragsstaaten:
**AT BE CH DE FR GB IT LI LU NL SE**

(56) Entgegenhaltungen:
**EP-A-0 021 287**
**EP-A-0 055 782**
**DE-A-2 525 412**
**DE-A-2 645 508**
**US-A-4 212 057**
**IBM TECHNICAL DISCLOSURE BULLETIN,
Band 5, Nr. 10, März 1963, New York (US), R.L.
BRADY: "Cross channel switch", Seiten 57+58
WERKSTATTSTECHNIK - ZEITSCHRIFT FÜR
INDUSTRIELLE FERTIGUNG, Band 72, Nr. 5,
Mai 1982, Springer Verlag, Würzburg (DE), V.
HARTMANN: "MPST, das flexible
Steuersystem für Standard- und
Sonderanwendungen", Seiten 247-252
WERKSTATTSTECHNIK - ZEITSCHRIFT FÜR
INDUSTRIELLE FERTIGUNG, Band 71, Nr. 12,
Dezember 1981, Springer Verlag, Würzburg
(DE), A. SIGNER: "CNC, nach MPST-
Empfehlungen aufgebaut", Seiten 729-733**

(73) Patentinhaber: **FRAUNHOFER-GESELLSCHAFT
ZUR FÖRDERUNG DER ANGEWANDTEN
FORSCHUNG E.V.
Leonrodstrasse 54
D-8000 München 19 (DE)**

(72) Erfinder: **Meier, Horst, Dr.-Ing.
Am Pichelsee 31a
D-1000 Berlin 30 (DE)**
Erfinder: **Müller, Gottfried, Ing. grad.
Lehrter Strasse 62
D-1000 Berlin 21 (DE)**

(74) Vertreter: **Kraus, Walter, Dr. et al
Patentanwälte Kraus, Weisert & Partner
Thomas-Wimmer-Ring 15
D-8000 München 22 (DE)**

**Beschreibung**

Die Erfindung betrifft eine Rechnerkopplung, umfassend einen ersten und zweiten Rechner, die beide mit einem gemeinsamen Speicher verbindbar sind, und eine Rechnerzugriffssteuerschaltung, welche über eine erste Rechnerzugriffsanforderungssignalleitung und eine erste Rechnerzugriffsquittungssignalleitung mit dem ersten Rechner und über eine zweite Rechnerzugriffsanforderungssignalleitung und eine zweite Rechnerzugriffsquittungssignalleitung mit dem zweiten Rechner verbunden ist und bei gleichzeitigem oder nahezu gleichzeitigem Empfang je eines Rechnerzugriffsanforderungssignals von beiden Rechnern zunächst einen der beiden Rechner mit dem Speicher verbindet, bis sie zu diesem Rechner ein Rechnerzugriffsquittungssignal abgibt, wonach sie den anderen Rechner über eine Schaltungseinrichtung mit dem Speicher verbindet.

Bei Steuereinrichtungen für computerisierte Steuerung, insbesondere für die computerisierte numerische Steuerung von Werkzeugmaschinen, Prozeßanlagen, Industrierobotern o.dgl. ist es zu bevorzugen, bestimmte standardisierte Steuerbaueinheiten zu verwenden, die je nach dem speziellen Anwendungszweck und den speziellen Betriebsbedingungen bei dem jeweiligen Anwendungszweck programmierbar sind und mit einem eigenen, als Prozessor ausgebildeten Rechner arbeiten.

Hat man zum Beispiel eine standardisierte Steueranordnung für beispielsweise sechs Achsen von Werkzeugmaschinen, Industrierobotern o.dgl., wie sie im Rahmen der Erfindung entwickelt wurde und wie sie weiter unten in näheren Einzelheiten beschrieben ist, so stellt sich in komplizierteren Fällen, in denen eine solche Sechsachsen-Lageregelung nicht ausreichend ist, das Problem, die Steuerungsanordnung so zu erweitern, daß damit beispielsweise eine Zwölfachsen-Lageregelung aufgeführt werden kann, oder auch nur zum Beispiel eine Zehnachsen-Lageregelung. In diesen Fällen ist es, insbesondere dann, wenn die Steueranordnung für die Lageregelung einer bestimmten Anzahl von Achsen, im vorliegenden Beispielsfall für die Sechsachsen-Lageregelung, standardisiert ist, sehr kostengünstig, wenn zwei solcher Steueranordnungen, die für sich selbständig arbeitsfähig sind, miteinander so gekoppelt werden können, daß sie als eine Einheit arbeiten können, bei welcher die Anzahl der lageregelten Achsen gleich der Summe der Achsen der einzelnen Steuereinheiten bzw. -anordnungen ist. Selbst wenn in diesen Fällen einige Achsen-Lageregelungen überzählig sind, kann die Zusammenkopplung von zwei selbständigen Steueranordnungen der vorgenannten Art bei Verwendung von standardisierten Steueranordnungen wesentlich günstiger sein, als wenn eine neue Steueranordnung gebaut werden muß, welche genau die gewünschte Anzahl von Achsen lageregeln kann.

Da beide Steueranordnungen jeweils einen eigenen Rechner haben und selbständig arbeiten können, ist es wichtig, daß insbesondere folgende beiden Forderungen erfüllt werden, wenn diese beiden Steueranordnungen zu einer Einheit zusammengefaßt werden:

(1) Wenn beide Steueranordnungen, die zusammengekoppelt werden, als Einheit arbeiten sollen, wie das zu fordern ist, dann muß sichergestellt sein, daß sich beide Steueranordnungen nicht gegenseitig blockieren können, insbesondere darf ein Fehler, der die Funktion der einen Steueranordnung lahmlegt, nicht auf die andere Steueranordnung zurückwirken, sie insbesondere nicht auch noch lahmlegen.

(2) Außerdem soll bei der Kopplung der beiden Steueranordnungen die Rechenleistung oder darin benutzten Rechner nicht langsamer werden, wenn diese beiden Rechner auf einen gemeinsamen Speicher arbeiten, der wegen des intensiven Datenaustauschs (Koordinierung) zwischen den beiden Steuerungen unbedingt erforderlich ist. Es ist zu fordern, daß die Rechner der beiden Steueranordnungen auf den gemeinsamen Speicher so arbeiten können, als ob es jeweils nur ihr eigener wäre, damit keine Rechenzeit verlorengeht bzw. die jeweilige Rechengeschwindigkeit, auf welche die beiden einzelnen Steueranordnungen für sich abgestimmt sind, erhalten bleibt.

Aus US—A—4 212 057 ist eine Rechnerkopplung der eingangs genannten Art bekannt, diese Rechnerkopplung ist aber schaltungsmäßig sehr aufwendig, da sie eine große Anzahl von Torschaltungen benötigt.

Weiter ist in EP—A—021 287 eine Anordnung zum Steuern einer Mehrzahl von Mikroprozessoren beschrieben, in der ein gemeinsamer Speicher vorhanden ist, der wahlweise mit einem jeweiligen Mikroprozessor verbunden werden kann, wobei eine Prioritätssteuerschaltung vorgesehen ist, welche eine Prioritätssteuerung der Mikroprozessoren durchführt. Dabei wird während des Zugriffs von einem der Mikroprozessoren zu dem Speicher derjenige Mikroprozessor, welcher ebenfalls gerade Zugriff zum Speicher verlangt, angehalten, bis der Zugriff freigegeben ist. Dadurch ergeben sich nachteilige Totzeiten, in denen der auf den Zugriff wartende Mikroprozessor praktisch ausfällt.

Außerdem ist in DE—A—2 645 508 eine Datenverarbeitungsanlage mit mehreren Prozessoren, an diese anschließbaren Speichern und mit einem zwischen die Prozessoren und die Speicher geschalteten Koordinator, dem von den Prozessoren Anforderungssignale und Adressensignale (Anforderung auf Zugriff zu einem Speicher) zuführbar sind und der bei Zufuhr eines Anforderungssignals von einem Prozessor diesen mit dem durch das Adressensignal bestimmten Speicher verbindet, bekannt. Diese Datenverarbeitungsanlage ist so ausgebildet, daß der Koordinator Einheiten, die jeweils mit einem Prozessor verbunden sind und Einheiten, die mit je einem Speicher verbunden sind, enthält, daß die mit den Prozessoren verbundenen Einheiten je eine Speicherauswahleinheit aufweisen, die vom Prozessor gelieferte Adressensignale, die den Speicher, mit dem eine Verbindung hergestellt werden soll, angeben, decodiert und die Einheit aufruft, die mit dem adressierten Speicher verbunden ist und die ihrerseits ein Signal abgibt, das den Datenweg zwischen dem mit ihr verbundenen Speicher und dem die Signalverbindung anfordernden Prozessor durchschaltet. Dadurch soll zwar erreicht werden, daß nicht nur die Prozessor möglichst freizügig zu den Speichern direkten Zugriff erhalten können, sondern daß der Koordinator auch einfach aufgebaut und für weitere Funktionen, wie Priorisieren von mehreren Anforderungen verschiedener Prozessoren auf Zugriff zu einem Speicher erweitert werden kann. Jedoch ist diese aufwendige Schaltungsanordnung sinnvoll nur für eine größere Anzahl von Prozessoren geeignet. Außerdem ist sie insofern nachteilig, als die einzelnen Prozessoren zyklisch an den Speicher angeschaltet werden, wodurch sich nicht unbeträchtliche Wartezeiten ergeben.

Schließlich ist aus der DE—A—2 525 412 eine Rechenanlage bekannt, die mehrere Speichereinheiten, mindestens eine Zentraleinheit, eine Anzahl Eingabe-/Ausgabesteuerungen mit Zykluszeiten, welche denen der Zentraleinheit entsprechen, sowie für jede Speichereinheit eine getrennte Speichersteuerung für den Datenaustausch zwischen einerseits der betreffenden Speichereinheit und andererseits den Zentraleinheiten und einer Anzahl Eingabe-/Ausgabesteuerungen aufweist. Die Speichersteuerungen sind als synchronlaufende Schrittschaltwerke mit Schaltzeiten entsprechend der Speicherzykluszeit ausgeführt, wobei jedes Schrittschaltwerk mit allen Zentraleinheiten sowie mit einer ausgewählten Anzahl Eingabe-/Ausgabesteuerungen separat verbunden ist und wobei jede Zentraleinheit jeweils gleichzeitig Zugriff zu allen Speichereinheiten hat und wobei ferner die erwähnte ausgewählte Anzahl von Eingabe-/Ausgabesteuerungen in Übereinstimmung mit der Verhältniszahl zwischen der Zykluszeit einer Zentraleinheit und der einer Speichereinheit, jedoch vermindert um die Gesamtanzahl von Zentraleinheiten, ist. Zwar kann heir die Zykluszeit von sowohl einer Zentraleinheit als auch die von einer Eingabe-/Ausgabesteuerung nur doppelt so groß wie die Speicherzykluszeit sein, und der Rechner kann mit zwei Speichereinheiten, zwei Speichersteuerungen, einer Zentraleinheit und zwei Eingabe-/Ausgabesteuerungen versehen sein. Die Zentraleinheit hat dann von je zwei aufeinanderfolgenden Schaltzeiten für die Dauer einer Schaltzeit Zugriff zu beiden Speichereinheiten, während in der anderen Schaltzeit jede der beiden Eingabe-/Ausgabesteuerungen lediglich Zugriff zu einer mit der betreffenden Speichersteuerungen verbundenen Speichereinheit hat. Jedoch werden auch hier die Speichereinheiten zyklisch umgeschaltet, so daß sich Wartezeiten ergeben.

Aufgabe der Erfindung ist es, eine Rechnerkopplung von auf einen gemeinsammen Speicher arbeitenden Rechnern je einer Steueranordnung zu schaffen, die es ermöglicht, die beiden Steueranordnungen zu einer als Einheit arbeitenden Steueranordnung zusammenzukoppeln, ohne daß die Rechenleistung in den Steueranordnungen geringer, d.h. die Rechengeschwindigkeit langsamer, wird.

Diese Aufgabe wird, ausgehend von einer Rechnerkopplung der eingangs genannten Art, erfindungsgemäß dadurch gelöst, daß die Rechnerzugriffssteuerschaltung aus zwei gleichen, je einem der Rechner zugeordneten Logikschaltungsanordnungen besteht, die ihren Rechner selbständig mit dem Speicher verbinden und vom Speicher abschalten und von denen jede während der Anschaltperiode ihres Rechners die andere Logikschaltungsanordnung gegen ein Verbinden des Speichers mit deren Rechner sperrt, wobei jede Logikschaltungsanordnung einen Inverter aufweist, dessen Eingang mit der Rechnerzugriffsanforderungssignalleitung ihres Rechners verbunden ist, sowie ein NAND-Tor, das einen ersten, mit dem Ausgang des Inverters verbundenen Eingang und einen zweiten, mit einer internen Logiksignalquelle verbundenen Eingang hat und dessen Ausgang mit dem zweiten Eingang der jeweils anderen Logikschaltungsanordnung verbunden ist, und daß jede Logikschaltungsanordnung je ein Flip-Flop aufweist, das an einem Eingang mit dem Ausgang des NAND-Tors dieser Logikschaltungsanordnung verbunden ist, während es über seinen Ausgang den zugeordneten Rechner an den gemeinsamen Speicher anschaltet oder von diesem abschaltet, wobei für die Zugriffszeit $T_s$ des Speichers die Beziehung

$$T < \frac{T_R}{2}$$

gilt, in welcher $T_R$ die Zugriffszeit von jedem der beiden Rechner ist.

Eine solche Recherkopplung ermöglicht über den gemeinsamen Speicher, auf den beide Rechner arbeiten, einen intensiven Datenaustausch und damit eine vollständige Koordinierung der beiden Steueranordnungen, von denen je eine von je einem der beiden Rechner selbständig gesteuert wird, ohne daß die beiden Steueranordnungen in ihrer Kopplung zu einer Einheit in der Rechengeschwindigkeit insgesamt langsamer werden, die ihrerseits im wesentlichen durch die Zugriffszeit der dem jeweiligen Rechner innerhalb seiner Steueranordnung allein zugeordneten Speicher bestimmt ist. Da diese Speicher umso kostenaufwendiger sind, je kürzer ihre Zugriffszeit ist, würde die Leistungsfähigkeit dieser Speicher bei einer Kopplung von zwei Steueranordnungen zu einer Einheit nicht mehr ausgenutzt werden, wenn der Speicher, auf welchen die beiden Rechner gemeinsam arbeiten, jedem dieser beiden Rechner nur mit derselben Zugriffszeit, wie ihn die eigenen Speicher des Rechners haben, antworten würde.

Weiter hat diese Rechnerkopplung sowohl den Vorteil eines besonders einfachen Aufbaus als auch den Vorteil, daß sie so auf die beiden miteinander zu koppelnden Steueranordnungen verteilt werden kann, daß diese beiden Steueranordnungen praktisch völlig gleich ausgebildet werden können, was für ihre Standardisierung wichtig ist.

Die Rechnerkopplung ist vorzugsweise so ausgebildet, daß die Rechnerzugriffssteuerschaltung jeweils einen mit je einem der beiden Rechner verbundenen Buspuffer alternativ an den Speicher anschaltet, da zum Anschalten eines Rechners an einen Speicher üblicherweise Buspuffer verwendet werden.

Weiter ist die Rechnerkopplung bevorzugt so ausgebildet, daß die Rechnerzugriffssteuerschaltung jeweils denjenigen Rechner zuerst mit dem Speicher verbindet, dessen Rechnerzugriffsanforderungssignal bei ihr zuerst eintrifft und daß sie bei gleichzeitigem Eintreffen je eines Rechnerzugriffsanforderungssignals autonom entscheidet, welchen von beiden Rechnern sie zuerst mit dem Speicher verbindet. Diese autonome Entscheidung kann eine einfache Zufallsentscheidung sein, die durch die Tatsache bewirkt wird, welches der beiden Rechnerzugriffsanforderungssignale die Rechnerzugriffssteuerschaltung zuerst auslöst, sofern nur sichergestellt ist, daß die Rechnerzugriffssteuerschaltung aufgrund ihres internen Aufbaus durch ein unmittelbar nachfolgendes Rechnerzugriffsanforderungssignal des anderen Rechners so lange nicht mehr beeinflußbar ist, bis das Rechnerzugriffsquittungssignal von demjenigen Rechner her eingetroffen ist, mit dem sie den Speicher zuerst verbunden hat.

Vorzugsweise bilden die beiden gleichen Flip-Flops zusammen in Verbindung mit der Logikschaltungsanordnung ein Drei-Zustands-Flip-Flop, dessen beide Ausgänge nur drei von vier möllichen Ausgangssignalkombinationen haben können. Diese drei erlaubten Zustände können beispielsweise so sein, daß beide Ausgänge hohes Potential haben, der eine Ausgang niedriges Potential und der andere Ausgang hohes Potential hat, sowie umgekehrt, wogegen der Zustand, daß beide Ausgänge niedriges Potential haben, ausgeschlossen ist. Da sich jedoch durch Inverter oder durch die Weiterverarbeitung der Logiksignale grundsätzlich niedriges oder hohes Potential als Logikausgangssignale eignen, kommt es nur darauf an, daß eine der vier möglichen Ausgangssignalkombinationen der beiden Ausgänge des Flip-Flops ausgeschlossen wird.

Eine wichtige Anwendung dieser Steuerkopplung besteht, wie bereits eingangs angedeutet wurde, darin, daß jeder der beiden Rechner, insbesondere als Prozessoren, auf je einer Steuerbaueinheit, insbesondere einer Steuerkarte für computerisierte numerische Steuerung vorgesehen ist, wobei die Rechnerzugriffssteuerschaltung und der Speicher sowie die Schaltungseinrichtung der Rechnerkopplung entweder jeweils auf einer der beiden Steuerbaueinheiten, insbesondere auf einer der Steuerkarten, oder verteilt, insbesondere zu gleichen Hälften, auf beiden Steuerbaueinheiten, insbesondere auf beiden Steuerkarten, angeordnet sind.

Die Ausbildung der Rechnerzugriffssteuerschaltung aus zwei gleichen Logikschaltungsanordnungen ermöglicht es, daß jede der beiden Logikschalteinrichtungen auf einer von beiden Steuerbaueinheiten, insbesondere einer von beiden Steuerkarten, angeordnet ist.

Eine besonders vorteilhafte und wichtige erfindungsgemäße Anwendung der Rechnerkopplung ergibt sich, wie ebenfalls bereits weiter oben angedeutet wurde, wenn die Steuereinheit, insbesondere die Steuerkarte, eine solche für computerisierte Steuerung ist, die ein selbständiges, von ihrem Rechner gesteuertes Steuer- bzw. Regelsystem umfaßt, wobei insbesondere der Rechner ein Prozessor mit einem oder mehreren eigenen Speichern ist und die Steuereinheit, insbesondere die Steuerkarte, vorzugsweise analoge und digitale Eingangsschaltungen sowie gegebenenfalls digitale und/oder analoge Ist- und/oder Sollwertschaltungen, und gegebenenfalls eine oder mehrere Schnittstellen zum Anschluß an Datenverarbeitungseinrichtungen und Bedienungseinrichtungen aufweist.

Insbesondere kann die Steuerkarte eine Einkarte für mehrachsige computerisierte numerische Steuerung von Werkzeugmaschinen oder Industrierobotern sein, wie sie im Rahmen der Arbeiten, die zur erfindungsgemäßen Rechnerkopplung geführt haben, entwickelt worden ist.

Die vorstehenden sowie weitere Vorteile und Merkmale der Erfindung seien nachstehend anhand einiger in den Figuren 1 bis 3 der Zeichnung im Prinzip dargestellter, besonders bevorzugter Ausführungsformen näher erläutert; es zeigen:

Figur 1 eine grundsätzliche Ausführungsform der erfindungsgemäßen Rechnerkopplung in einem Blockschaltbild dargestellt;

Figur 2 ein nähere Einzelheiten zeigendes Schaltbild einer besonders bevorzugten Ausführungsform einer Rechnerkopplung nach der Erfindung; und

Figur 3 eine Einkarte für die computerisierte numerische Steuerung von Werkzeugmaschinen und Industrierobotern mit seitlich rechts und links davon angedeuteten externen Einheiten, die mit der Einkarte verbindbar sind, wobei auf dieser Einkarte eine Rechnerkopplung nach der Erfindung vorgesehen ist, welche es ermöglicht, zwei gleichartige Einkarten der dargestellten Art miteinander zu einer Einheit zusammenzufassen, die im vorliegenden Falle eine Zwölfachsen-Lageregelung ermöglicht.

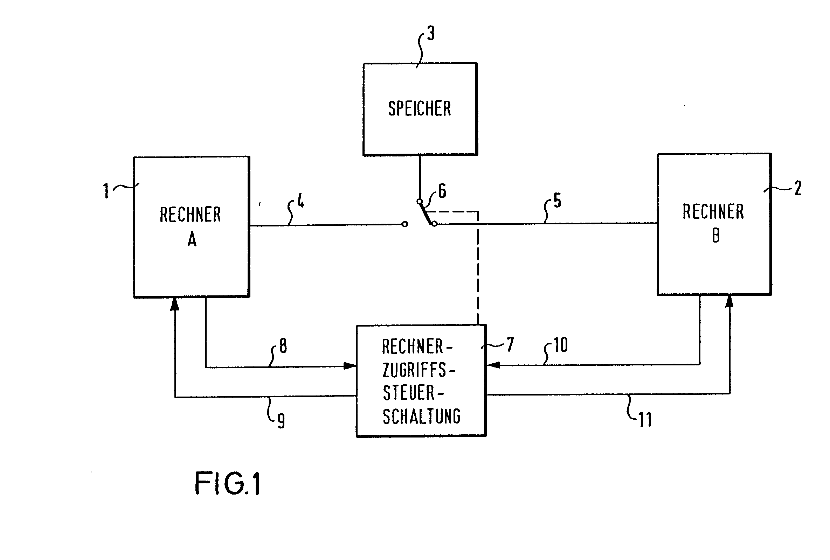

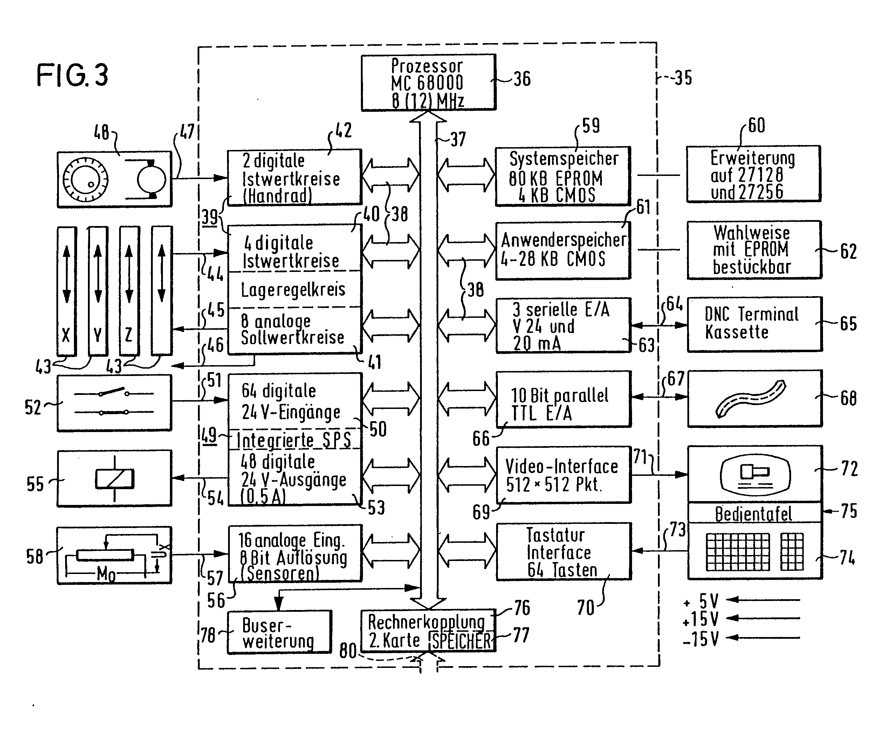

Es sei zunächst auf die Figur 1 Bezug genommen, wonach ein erster Rechner 1, der als "Rechner A" bezeichnet ist und sich vorzugsweise auf einer Einsteuerkarte 35 gemäß der Figur 3 als Prozessor 36 befindet, und ein zweiter Rechner 2, der als "Rechner B" bezeichnet ist und sich auf einer anderen Einsteuerkarte 35 der gleichen Art, ebenfalls als Prozessor 36, befindet, auf einen gemeinsamen Speicher 3 arbeiten, welcher je zur Hälfte aus dem Speicher 77 der einen Einkarte (siehe Figur 3) und dem Speicher 77 der anderen Einkarte zusammengesetzt ist. Der erste Rechner 1 ist über eine erste Daten- und Adressenübertragungsleitung 4 und der zweite Rechner 2 über eine zweite Daten- und Adressenübertragungsleitung 5 jeweils mit einer Schaltungseinrichtung 6 verbunden, welche alternativ die erste oder zweite Daten- und Adressenübertragungsleitung 4 bzw. 5 an den Speicher 3 anschaltet. Die Daten- und Adressenübertragungsleitungen 4 und 5 sind auf der Einkarte 35 der Figur 3 jeweils der interne

4

Bus 37 der jeweiligen Einkarte. Die Schaltungseinrichtung 6 kann aus zwei Buspuffern bestehen, von denen jeweils eine in jeder der Rechnerkopplungen 76 von jeder Einkarte 35 vorgesehen ist.

Die Schaltungseinrichtung 6 wird durch eine Rechnerzugriffssteuerschaltung 7 geschaltet, welche über eine erste Rechnerzugriffanforderungssignalleitung 8 und eine erste Rechnerzugriffsquittungssignalleitung 9 mit dem ersten Rechner 1 und über eine zweite Rechnerzugriffsanorderungssignalleitung 10 sowohl eine zweite Rechnerzugriffsquittungssignalleitung 11 mit dem zweiten Rechner 2 verbunden ist.

Die Funktionsweise der Rechnerzugriffssteuerschaltung 7 ist derart, daß sie bei gleichzeitigem oder nahezu gleichzeitigem Empfang eines Rechnerzugriffsanforderungssignals von beiden Rechnern 1 und 2 zunächst einen der beiden Rechner mit dem Speicher 3 verbindet, bis sie an diesen Rechner das Rechnerzugriffsquittungssignal abgibt, welches anzeigt, daß der Rechnerzugriff dieses Rechners beendet ist. Danach schaltet die Rechnerzugriffssteuerschaltung 7 aufgrund des immer noch anliegenden Rechnerzugriffsanforderungssignals von dem anderen Rechner nunmehr diesen an den Speicher 3 an.

Da der Speicher 3 so ausgebildet ist, daß seine Zugriffszeit geringer als die Hälfte der von jedem der beiden Rechner 1 und 2 erwarteten Zugriffszeit ist, können diese beiden Rechner 1, 2 so auf den Speicher 3 arbeiten, als ob es jeweils nur ihr eigener Speicher wäre. Die von dem Rechner 1 und 2 erwartete Zugriffszeit ist die Zugriffszeit, mit welcher dieser Rechner auf seine eigenen Speicher arbeitet, d.h. also im Falle der Einkarte 35 der Figur 3, die Zugriffszeit des Systemspeichers 59 und des Anwenderspeichers 61, die dem Prozessor 36 als ausschließlich eigene Speicher zugeordnet sind.

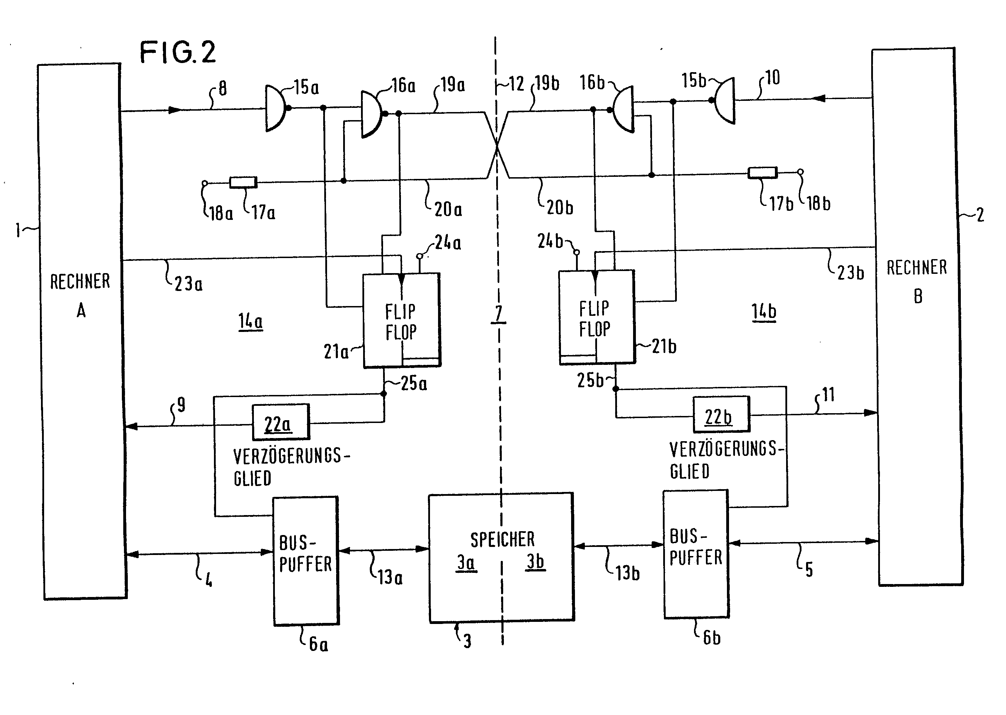

Es sei nun auf das nähere Einzelheiten einer bevorzugten Ausführungsform einer Rechnerkopplung zeigende Schaltbild der Figur 2 eingegangen, in dem für gleichartige Teile die gleichen Bezugszeichen wie in Figur 1 verwendet worden sind, wobei die Schaltungseinrichtung 6 der Figur 1 aus zwei, mit 6a und 6b bezeichneten einzelnen Buspuffern besteht. Die gesamte Rechnerkopplung der Figur 2 besteht aus zwei gleichen Hälften, von denen die eine Hälfte zwischen dem ersten Rechner 1 und der gestrichelten Linie 12 dargestellt ist, während die andere Hälfte zwischen dem zweiten Rechner 2 und der gestrichelten Linie 12 eingezeichnet ist. Die gestrichelte Linie 12 stellt damit gewissermaßen die Trennlinie zwischen zwei Einkarten 35 (siehe Figur 3) dar, was jedoch nicht ausschließt, daß auch eine andere Verteilung der Elemente der Rechnerkopplung auf zwei Einkarten oder sonstige Steueranordnungen möglich ist.

Außer einem jeweiligen Buspuffer 6a oder 6b und einer Hälfte 3a oder 3b des Speichers 3 sowie einer entsprechenden Daten- und Adressenübertragungsleitung 13a oder 13b zwischen dem jeweiligen Buspuffer und der jeweiligen Speicherhälfte besteht jede Rechnerkopplung 76 der Figur 3, die also, bezogen auf die Zusammenschaltung zweier Rechnerkopplungen, funktionell jeweils eine Rechnerkopplungshälfte ist, in der vorliegenden bevorzugten Ausführungsform aus zwei genau gleichen Logikschaltungsanordnungen 14a und 14b.

Es sei nun der Aufbau dieser beiden Logikschaltungsanordnungen 14a und 14b näher erläutert:

Jede Logikschaltungsanordnung 14a und 14b weist einen Inverter 15a bzw. 15b auf, der mit der Rechnerzugriffsanforderungssignalleitung 6 bzw. 10 des zugeordneten Rechners 1 bzw. 2 verbunden ist. Weiter ist ein NAND-Tor 16a bzw. 16b vorgesehen, der zwei Eingänge besitzt, von denen der eine Eingang mit dem Ausgang des Inverters 15a bzw. 15b verbunden ist, während der andere Eingang über einen Widerstand 17a bzw. 17b mit einer internen Logiksignalquelle verbunden ist, die als Anschluß bei 18a bzw. 18b angedeutet ist. Diese interne Logiksignalquelle ist beispielsweise einfach eine Gleichspannungsquelle vorbestimmber Spannung Vcc.

Der Ausgang des NAND-Tors 16a bzw. 16b ist mit dem in Fig. 2 unteren Eingang des NAND-Tors 16b bzw. 16a der jeweils anderen Logikschaltungseinrichtung über Anschlußleitungen 19a bzw. 19b sowie 20a bzw. 20b verbunden, über welche die beiden hälftigen Rechnerkopplungen 76 (siehe Figur 3) zweier Einkarten 35, abgesehen von den nichtdargestellten Verbindungsleitungen, welche die beiden Speicherhälften 3a und 3b des gemeinsamen Speichers 3 verbinden, miteinander verbindbar sind. Eine solche Speicherhälfte ist in Figur 3 mit 77 bezeichnet, und die dort eingezeichnete Verbindung 80 umfaßt daher bei der Ausführungsform nach der Figur 2 die vorgenannten Verbindungsleitungen, welche die Speicherhälften 3a und 3b miteinander verbinden, und die Verbindungsleitungen 19a, 20b und 19b, 20a.

Weiterhin weist jede Logikschaltungsanordnung 14a und 14b je ein Flip-Flop 21a bzw. 21b auf, dessen Setzeingang mit dem Ausgang des NAND-Tors 16a bzw. 16b und dessen Rücksetzeingang mit dem Ausgang des Inverters 15a bzw. 15b der jeweiligen Logikschaltungsanordnung 14a bzw. 14b verbunden ist. Der Ausgang des Flip-Flops 21a bzw. 21b ist einerseits mit dem Schalteingang des zugeordneten Buspuffers 6a bzw. 6b verbunden, über den der Buspuffer gesperrt oder geöffnet werden kann, und andererseits über ein Verzögerungsglied 22a bzw. 22b mit der Rechnerzugriffsquittungssignalleitung 9 bzw. 11 des zugeordneten Rechners 1 bzw. 2. Außerdem ist das Flip-Flop über eine Leitung 23a bzw. 23b mit der Taktimpulsquelle des zugeordneten Rechners 1 bzw. 2 verbunden. Mit 24a bzw. 24b ist ein Spannungsanschluß mit jeweiligen Flip-Flops bezeichnet, welcher mit der gleichen Spannungsquelle verbunden ist, wie der Anschluß 18a bzw. 18b.

Es sei nun die Funktionsweise der vorstehend beschriebenen Rechnerkopplung der Figur 2 erläutert:

Es sei zunächst davon ausgegangen, daß die beiden Logikschaltungsanordnungen 14a und 14b sowie die beiden Speicherhälften 3a und 3b entsprechend der gestrichelten Linie 12 voneinander getrennt sind und der jeweilige Rechner Zugriff zu seiner eigenen Speicherhälfte 3a bzw. 3b haben will: das sei anhand der linken Hälfte der Schaltung der Figur 2 erläutert. Solange der Rechner 1 noch keinen Zugriff zu seiner Speicherhälfte 3a haben will, liegt an der Rechnerzugriffsanforderungssignalleitung 8 ein hohes logisches Niveau an, und die bei 18a angeschlossene interne Logiksignalquelle hat ebenfalls ein hohes logisches Niveau. Das hat wegen des Inverters 15a zur Folge, daß der eine Eingang des NAND-Tors 16a ein niedriges logisches Niveau und der andere Eingang ein hohes logisches Niveau hat, so daß das Flip-Flop 21a rückgesetzt ist und infolge des an seinem Setzeingang anliegenden hohen logischen Niveaus am Ausgang des NAND-Tors 16a von den über die Leitung 23a zugeführten Taktimpulsen nicht zugeschaltet werden kann; in diesem Zustand ist das Signal am Ausgang 25a des Flip-Flops 21a derart, daß der Buspuffer 6a gesperrt ist. Wenn nun der Rechner 1 als Anforderungssignal auf die Rechnerzugriffsanforderungssignalleitung 8 ein niedriges logisches Niveau gibt, wird der bisher auf niedrigem logischem Niveau liegende Eingang des NAND-Tors 16a auf hohes logisches Niveau umgeschaltet, wodurch sich am Ausgang des NAND-Tors 16a ein niedriges logisches Niveau ergibt, welches das Flip-Flop 21a vorbereitet, d.h. für eine Umschaltung durch den nächsten Taktimpuls, der über die Leitung 23a zugeführt wird, freigibt. Durch diese Umschaltung des Flip-Flops 21a erhält der Buspuffer 6a ein Signal, das ihn auf Durchgang schaltet, so daß der Zugriff des Rechners 1 über die Daten- und Adressenübertragungsleitungen 4 und 13a zu seiner Speicherhälfte 3a stattfinden kann. Dieses gleiche Signal, das mittels des Verzögenungsglieds 22a um weniger als die Hälfte der vom Rechner 1 erwarteten Speicherzugriffszeit verzögert wird, wird dem Rechner 1 über die Rechnerzugriffsquittungssignalleitung 9 als Quittungssignal zugeführt, so daß dieser nach erfolgtem Zugriff zu seiner Speicherhälfte 3a das Anforderungssignal, das er auf die Rechnerzugriffsanforderungssignalleitung 8 gegeben hat, löscht und damit diese Leitung wieder auf hohes logisches Niveau gebracht wird.

Infolgedessen gewähren die Logikschaltungsanordnungen 14a und 14b im voneinander getrennten Zustand jedem ihrer Rechner 1 bzw. 2 Zugriff zu seiner Speicherhälfte 3a bzw. 3b.

Wenn nun die beiden Logikschaltungsanordnungen 14a und 14b und die beiden Speicherhälften 3a und 3b zu der Gesamtschaltung der Figur 2 miteinander verbunden werden, dann wird der Signalpegel auf der Anschlußleitung 20a bzw. 20b und damit an dem damit verbundenen einen Eingang des NAND-Tors 16a bzw. 16b durch den Signalpegel des Ausgangs des NAND-Tors 16b bzw. 16a der jeweils anderen Logikschaltungsanordnung bestimmt, d.h. also der Signalpegel auf der Leitung 20a wird durch den Signalpegel bestimmt, der am Ausgang des NAND-Tors 16b vorhanden ist, und der Signalpegel auf der Leitung 20b wird durch den Signalpegel bestimmt, der am Ausgang des NAND-Tors 16a vorhanden ist. Dieser Signalpegel am Ausgang der NAND-Tore 16a und 16b ist, wie sich aus der obigen Erläuterung der Einzelfunktionsweise der Logikschaltungsanordnungen 14a und 14b ergibt, immer hohes logisches Niveau, wenn auf der jeweiligen Rechnerzugriffsanforderungssignalleitung 8 bzw. 10 kein Anforderungssignal liegt. Wenn nun beispielsweise der Rechner 1 ein Anforderungssignal aussendet, dann geht entsprechend der obigen Erläuterung der Signalpegel am Ausgang des diesem Rechner zugeordneten NAND-Tors 16a auf niedriges logisches Niveau und zieht dadurch den damit über die Anschlußleitungen 19a und 20b verbundenen Eingang des NAND-Tors 16b des anderen Rechners 2 ebenfalls auf niedriges logisches Niveau, wodurch der Ausgang des NAND-Tors 16b so lange nicht auf niedriges logisches Niveau schalten kann, solange das Anforderungssignal des Rechners 1 noch nicht gelöscht ist, d.h. also solange noch nicht der Zugriff dieses Rechners zum Speicher 3 beendet ist. Wenn daher der Rechner 2 während der Zugriffszeit des Rechners 1 ein Anforderungssignal auf seine Rechnerzugriffsanforderungssignalleitung 10 gibt, dann wird dieses erst wirksam, wenn der Rechner 1 sein Anforderungssignal aufgrund eines Quittungssignals gelöscht hat. Wenn das geschehen ist, bewirkt nun seinerseits das Anforderungssignal des Rechners 2, daß der mit den Anschlußleitungen 20a und 19b verbundene Eingang des NAND-Tors 16a auf niedriges logisches Niveau umgeschaltet und damit ein Zugriff des Rechners 1 während des Zugriffs des Rechners 2 zum Speicher 3 blockiert wird.

Wenn beide Rechner 1 und 2 zum genau gleichen Zeitpunkt ein Anforderungssignal auf ihre Rechnerzugriffsanforderungssignalleitung 8 bzw. 10 geben, dann ist es, wie durch experimentelle Untersuchungen, die im Rahmen der vorliegenden Erfindung durchgeführt wurden, festgestellt werden konnte, so, daß infolge der Bauteil- und/oder Schaltungstoleranzen stets einer der beiden Rechner den Zugriff erhält, während der andere warten muß; es erfolgt also keine gegenseitige Blockierung der Logikschaltungsanordnungen 14a und 14b. Welcher der beiden Rechner in diesem Falle zuerst Zugriff erhält, ist belanglos, weil trotzdem beide Rechner innerhalb der von ihnen erwarteten Zugriffszeit Zugriff zum Speicher 3 erhalten.

Sollte einer der beiden Rechner 1, 2 den gemeinsamen Speicher 3 nicht nach Empfang eines Quittungssignals freigeben, zum Beispiel weil der zweite Rechner 2 defekt ist, dann wird der dadurch blockierte erste Rechner 1 nach einer vorbestimmten Zeitdauer, beispielsweise von 8 μsec, durch ein Interrupt gezwungen, den Versuch, auf den gemeinsamen Speicher 3 zuzugreifen, aufzugaben, und es können entsprechende für diesen Fehlerfall vorgesehene Maßnahmen ergriffen werden. Diese Verhaltensweise der Rechner ist eine normalerweise übliche Eigenschaft der für diese Zwecke verwendeten, zum Beispiel auf der Einkarte 35 vorgesehenen, Mikroprozessoren.

Es sei nun nachstehend anhand der Figur 3 eine Einkarte 35 erläutert, die mit einer Rechnerkopplung der in den Figuren 1 und 2 gezeigten Art versehen ist, wodurch es ermöglicht wird, zwei derartige Einkarten, die je eine Sechsachsen-Lageregelung haben, zu einer einheitlich arbeitenden Zwölfachsen-Lageregelung zu verbinden.

Die Einkarte 35, die eine kostengünstige und außerordentlich leistungsfähige computerisierte numerische Steuerung mit hoher Anwendungsbreite ermöglicht, besitzt als eigentliche Steuereinrichtung einen Prozessor 36. Dieser Prozessor 36 ist eingangs- und ausgangsmäßig über einen internen Bus 37 mit den einzelnen Baueinheiten, die auf der Einkarte 35 untergebracht sind, verbunden, die durch entsprechende Anschlüsse 38 eingangs- und ausgangsseitig an den internen Bus 37 angekoppelt sind (in Figur 3 sind nur einige dieser Anschlüsse aus Gründen einer übersichtlicheren Darstellung mit einem Bezugszeichen versehen).

Auf der Einkarte 35 sind folgende einzelne Baueinheiten vorgesehen: eine Lageregelungsschaltung 39, die ein Istwertsystem 40 und ein Sollwertsystem 41 umfaßt; außerdem gehört zu der Lageregelungsschaltung 39 noch eine Handradeingangsschaltung 42. Die Lageregelungsschaltung 39 dient dazu, entsprechende Achsen 43 in Werkzeugmaschinen, Industrierobotern o.dgl. in ihrer Lage zu regeln, und ist deshalb über Istwerteingänge 44 und über Sollwertausgänge 45 mit den entsprechenden Gebern und Stellgliedern der Achsen 43 verbunden. Zusätzliche Sollwertausgänge vom Sollwertsystem 41 sind bei 46 vorgesehen. Die Handradeingangsschaltung 42 dient dazu, Istwertsysteme nicht genutzter Achsen als Handradeingänge oder als zusätzliche Meßsysteme, zum Beispiel direktes Werkstückmeßsystem, zu nutzen; hierzu sind entsprechende Istwerteingänge 47 vorgesehen, die von zusätzlichen äußeren Gebern herkommen, welche, wie bei 48 angedeutet ist, an einem Handrad, einer Dichenmeßeinrichtung, o.dgl. vorgesehen sind.

Weiterhin ist eine speicherprogrammierbare Steuerschaltung 49 auf der Einkarte 35 vorgesehen, deren Eingangsschaltungen 50 über Eingänge 51 mit Digitalgebern 52, beispielsweise Endschaltern, verbunden werden können, und deren Ausgangsschaltungen 53 über Ausgänge 54 mit Stellgliedern 55 verbunden werden können, wie beispielsweise mit Magnetventilen, Magnetbremsen, Hydraulikventilen, Pumpen o.dgl.

Schließlich sind analoge Eingangsschaltungen 56 vorgesehen, die über entsprechende Eingänge 57 mit Analoggebern 58 der Maschine, des Industrieroboters o.dgl. verbindbar sind; diese Analoggeber 58 können beispielsweise zusätzliche Meßgeräte, Temperaturkontrolleinrichtungen, Grenzwertüberwachungsgeber o.dgl. sein.

Die vorstehend beschriebenen Baueinheiten 39, 49 und 56 bilden gewissermaßen den maschinen- bzw. industrieroboterseitigen Teil der Einkarte 35, die außerdem noch einen datenverarbeitungsseitigen Teil aufweist, der nachstehend kurz erläutert ist und folgendes umfaßt:

Zunächst ist ein Systemspeicher 59 vorgesehen, der dazu dient, das Grundprogramm zu speichern, welches von der jeweiligen speziellen Anwendung der Einkarte 35 abhängt. Dieser Systemspeicher kann durch entsprechende Steckplätze, die auf der Einkarte 35 vorgesehen sind, erweitert werden, wie bei 60 angedeutet ist.

Weiter befindet sich auf der Einkarte 35 ein Anwenderspeicher 61, in den die speziellen Daten, mit denen das im Systemspeicher 59 gespeicherte Grundprogramm betrieben werden soll, eingegeben werden. Der Anwenderspeicher 61 ist, wie bei 62 angedeutet, wahlweise mit EPROM-Speichern anstelle von CEMOS-Speichern durch entsprechende, auf der Einkarte 35 vorgesehene Steckplätze bestückbar. Es sei darauf hingewiesen, daß alle Speicherbereiche des Anwenderspeichers 61 gepuffert sind.

Weiter ist eine serielle Dateneingabe-/-ausgabeeinheit 63 vorgesehen, die über Anschlüsse 64 an äußere Datenspeicher- bzw. -verarbeitungsgeräte 65 angeschlossen werden kann, zum Beispeil zum Zwecke der Programmeingabe in den Anwenderspeicher 61, oder zum Anschluß eines externen Rechners zur direkten Steuerung oder zum Zwecke der Kommunikation zwischen mehreren Maschinen (Datenaustausch).

Eine parallele Dateneingabe-/-ausgabeeinheit 66 auf der Einkarte 35 kann über Anschlüsse 67 an entspechende Datenspeicher- bzw. -verarbeitungsgeräte 68 angeschlossen werden, zum Beispiel an einen Drucker, einen Lochstreifenstanzer oder -leser o.dgl.

Zum datenverarbeitungsseitigen Teil gehören außerdem noch eine Video-Schnittstelle 69 und eine Tastatur-Schnittstelle 70, von denen erstere über Ausgangsanschlüsse 71 an einen Videomonitor 72 und letztere über Eingangsanschlüsse 73 an eine Tastatur 74 einer Bedientafel 75 anschließbar ist.

Schließlich besitzt die Einkarte 35 noch eine Rechnerkopplungseinheit 76 mit Speicher 77 und eine Buserweiterungseinheit 78. Mittels der Rechnerkopplung 76 können, wie bei 80 angedeutet ist, zwei identische Einkarten 35 direkt miteinander gekoppelt werden. Die Buserweiterung 78 ist eine Schnittstellenerweiterung für Hardware.

Es seien nachstehend Daten einer bevorzugten Ausführungsform einer Einkarte 35 angegeben:

(a) Lageregelungsschaltung 39
Achsenzahl:
6 lagegeregelte Achsen
Istwertsystem:
Inkrementale Impulsgeber mit einem Nullimpuls. Die Istwertimpulse werden in einem zyklisch absoluten Istwertzähler (16 Bit) aufsummiert und von der Lageregelung im Lageregeltakt übernommen
Sollwertsystem:
8 Sollwertausgänge mit 12 Bit D/A-Wandler±10 V und Reglerfreigabesignal (6 lagegeregelte Achsen+2 Ausgänge für z.B. Drehzahlsollwert oder Sollwert für Schweißstrom o.ä.).
Abtastrate:
ist auf 2, 4, 8, 16 msec einstellbar.

(b) Eingangsschaltungen 50:
umfassen 64 optoentkoppelte digitale 24V-Eingänge. Bei integrierter SPS können alle Eingänge (außer Referenzpunkt, Reglerfreigabe und Endschalter) frei belegt werden. Zusätzlich lassen sich NC-interne Zustände unmittelbar abfragen.

(c) Ausgangsschaltungen 52:
umfassen 48 optoentkoppelte dauerkurzschlußfeste überlastgeschützte digitale 24V-Ausgänge. Bei integrierter SPS sind alle 48 Ausgänge frei belegbar. Alle Ausgänge sind für 2A ohmsche oder induktive Lasten ausgelegt. Lampenlast max. 6 W. Ausgänge sind überlastsicher und kurzschlußfest: mittels Leistungsschaltern 1 bzw. 27 aufgebaut.

(d) Analoge Eingangsschaltungen:
Für +/− 10 V jeweils 4 Eingänge mit 8 Bit A/D-Wandler und für 0 bis 5 V jeweils 12 Eingänge mit 8 Bit A/D-Wandler.

(e) Prozessor 36:
Vorgesehen ist ein 16 Bit Mikroprozessor MC 68 000 mit 4, 8, (10), (12) MHz und 24 Bit Adreßraum.

(f) Systemspeicher 59:
Vorhanden sind 10 Steckplätze für unterschliedliche EPROM-Typen (Systemprogrammspeicher), nämlich

```
2716   10×2   KB= 20 KB
2732   10×4   KB= 40 KB
2764   10×8   KB= 80 KB
27128  10×16  KB=160 KB
27256  10×32  KB=320 KB
```

(g) Anwenderspeicher 61:
Vorhanden sind 8 Steckplätze à 2, 4, 8 KB CMOS, wahlweiseauch mit 2716, 2732, 2764 EPROM bestückbar,

| | |
|---|---|
| Arbeitsspeicher | 4 KB |
| integrierte SPS | (4 KB) |
| NC-Programmspeicher | 4—60 KB |

(h) Serielle Dateneingabe/-ausgabeeinheit 63:
Vorgesehen sind drei V24-Schnittstellen mit programmierbarer Baudrate (50—19200), davon eine auf 20 mA umschalt-bar.

(i) Parallele Dateneingabe/-ausgebeeinheit 66:
Vorgesehen sind 8 programmierbare Ein-/Ausgänge plus 4 Steuersignale (TTL), z.B. für Lochstreifen-Stanzer/Leser oder weiteres Tastatur-Interface.

(j) Viddeo-Schnittstelle 69:
Grafik 512×512 Punkte Auflösung, Vektorgenerator ASCII Zeichensatz, Schriftgröße variabel von 5×8 bis 80×128 Punkte einstellbar, inverse Darstellung der Schrift, Cursorgröße und -blinkzeit programmierbar.

(k) Tastaturschnittstelle 70:
Umfassend 72 Tasten, und zwar 12 Tasten zur Zahleneingabe und 60 Funktionstasten.

(l) Buserweiterungseinheit 78:
Gepufferte Buserweiterung mit einem Adreßraum von 128 KW für anwendungsabhängige Schnittstellen oder Speichererweiterung.

**0 113 379**

(m) Rechnerkopplungseinheit 76:
Die Kopplung zweier Karten zu maximal 12 Achsen oder 4 Handrädern und 8 Achsen ist möglich.

(n) Spannungsversorgung:
5 V und +/− 15 V.


**Patentansprüche**

1. Rechnerkopplung, umfassend einen ersten und zweiten Rechner (1, 2), die beide mit einem gemeinsamen Speicher (3) verbindbar sind, und eine Rechnerzugriffssteuerschaltung (7), welche über eine erste Rechnerzugriffsanforderungssignalleitung (8) und eine erste Rechnerzugriffsquittungssignalleitung (9) mit dem ersten Rechner (1) und über eine zweite Rechnerzugriffsanforderungssignalleitung (10) und eine zweite Rechnerzugriffsquittungssignalleitung (11) mit dem zweiten Rechner (2) verbunden ist und bei gleichzeitigem oder nahezu gleichzeitigem Empfang je eines Rechnerzugriffsanforderungssignals von beiden Rechnern (1, 2) zunächst einen der beiden Rechner (1, 2) mit dem Speicher (3) verbindet, bis sie zu diesem Rechner (1, 2) ein Rechnerzugriffsquittungssignal abgibt, wonach sie den anderen Rechner (2, 1) über eine Schaltungseinrichtung (6, 6a, 6b) mit dem Speicher (3) verbindet, dadurch gekennzeichnet, daß die Rechnerzugriffssteuerschaltung (7) aus zwei gleichen, je einem der Rechner (1, 2) zugeordneten Logikschaltungsanordnungen (14a, 14b) besteht, die ihren Rechner (1, 2) selbständig mit dem Speicher (3) verbinden und vom Speicher abschalten und von denen jede während der Anschaltperiode ihres Rechners (1, 2) die andere Logikschaltungsanordnung (14a, 14b) gegen ein Verbinden des Speichers (3) mit deren Rechner (2, 1) sperrt, wobei jede Logikschaltungsanordnung (14a, 14b) einen Inverter (15a, 15b) aufweist, dessen Eingang mit der Rechnerzugriffsanforderungssignalleitung (8, 10) ihres Rechners (1, 2) verbunden ist, sowie ein NAND-Tor (16a, 16b), das einen ersten, mit dem Ausgang des Inverters (15a, 15b) verbundenen Eingang und einen zweiten, mit einer internen Logiksignalquelle (18a, 18b) verbundenen Eingang hat und dessen Ausgang mit dem zweiten Eingang der jeweils anderen Logikschaltungsanordnung (14a, 14b) verbunden ist, und daß jede Logikschaltungsanordnung (14a, 14b) je ein Flip-Flop (21a, 21b) aufweist, das an einem Eingang mit dem Ausgang des NAND-Tors (16a, 16b) dieser Logikschaltungsanordnung (14a, 14b) verbunden ist, während es über seinen Ausgang (25a, 25b) den zugeordneten Rechner (1, 2) an den gemeinsamen Speicher (3) anschaltet oder von diesem abschaltet, wobei für die Zugriffszeit $T_S$ des Speichers (3) die Beziehung

$$T < \frac{T_R}{2}$$

gilt, in welcher $T_R$ die Zugriffszeit von jedem der beiden Rechner (1, 2) ist.

2. Rechnerkopplung nach Anspruch 1, dadurch gekennzeichnet, daß die Rechnerzugriffssteuerschaltung (7) jeweils einen mit je einem der beiden Rechner (1, 2) verbundenen Buspuffer (6a, 6b) alternativ an den Speicher (3) anschaltet.

3. Rechnerkopplung nach Anspruch 1 oder 2, dadurch gekennzeichnet, daß die Rechnerzugriffssteuerschaltung (7) jeweils denjenigen Rechner (1, 2) zuerst mit dem Speicher (3) verbindet, dessen Rechnerzugriffsanforderungssignal bei ihr zuerst eintrifft und daß sie bei gleichzeitigem Eintreffen je eines Rechnerzugriffsanforderungssignals autonom entscheidet, welchen von beiden Rechnern (1, 2) sie zuerst mit dem Speicher (3) verbindet.

4. Rechnerkopplung nach Anspruch 1, dadurch gekennzeichnet, daß die beiden gleichen Flip-Flops (21a, 21b) zusammen in Verbindung mit der Logikschaltungsanordnung (14a, 14b) ein Drei-Zustands-Flip-Flop bilden, dessen beide Ausgänge (25a, 25b) nur drei der vier möglichen Ausgangssignalkombinationen haben können.

5. Rechnerkopplung nach einem der Ansprüche 1 bis 4, dadurch gekennzeichnet, daß jeder der beiden Rechner (1, 2), insbesondere als Prozessoren (36), auf je einer Steuerbaueinheit, insbesondere einer Steuerkarte (35) für computerisierte numerische Steuerung vorgesehen ist, wobei die Rechnerzugriffssteuerschaltung (7) und der Speicher (3, 77) sowie die Schaltungseinrichtung (6, 6a, 6b) der Rechnerkopplung (76) entweder jeweils auf einer der beiden Steuerbaueinheiten, insbesondere einer der Steuerkarten (35), oder verteilt, insbesondere zu gleichen Hälften, auf beiden Steuerbaueinheiten, insbesondere auf beiden Steuerkarten (35), angeordnet sind.

6. Rechnerkopplung nach Anspruch 5, und einem der Ansprüche 1 oder 4, dadurch gekennzeichnet, daß jede der beiden Logikschaltungsanordnungen (14a, 14b) auf einer von beiden Steuerbaueinheiten, insbesondere einer von beiden Steuerkarten (35), angeordnet ist.

7. Rechnerkopplung nach Anspruch 5 oder 6, dadurch gekennzeichnet, daß die Steuereinheit, insbesondere die Steuerkarte (35), eine solche für computerisierte Steuerung ist, die ein selbstängiges, von ihrem Rechner (1, 2) gesteuertes Steuer- bzw. Regelsystem umfaßt, wobei insbesondere der Rechner ein Prozessor (36) mit einem oder mehreren eigenen Speichern (59, 61) ist und die Steuereinheit, insbesondere die Steuerkarte (35), vorzugsweise analoge und digitale Eingangsschaltungen (50, 53, 56) sowie

9

gegebenenfalls digitale und/oder analoge Ist- und/oder Sollwertschaltungen (40, 41, 42) und gegebenenfalls eine oder mehrere Schnittstellen (63, 66, 69, 70) zum Anschluß an Datenverarbeitungseinrichtungen (65, 68) und Bedienungseinrichtungen (72, 74, 75) aufweist.

8. Rechnerkopplung nach einem der Ansprüche 5 bis 7, dadurch gekennzeichnet, daß die Steuerkarte eine Einkarte (35) für mehrachsige computerisierte numerische Steuerung von Werkzeugmaschinen oder Industrierobotern ist.

**Revendications**

1. Coupleur de processeurs, comprenant un premier et un second processeur (1, 2), qui peuvent tous deux être reliés à une mémoire commune (3), et un montage de commande d'accès de processeur (7), qui est relié par l'intermédiaire d'une première ligne de signal de réquisition d'accès de processeur (8) et une première ligne de signal d'acquit d'accès de processeur (9), au premier processeur (1) et par l'intermédiaire d'une seconde ligne de signal de réquisition d'accès de processeur (10) et une seconde ligne de signal d'acquit d'accès de processeur (11), au second processeur (2) et avec une réception simultanée ou presque simultanée d'un signal de réquisition d'accès de processeur à partir de chacun des deux processeurs (1, 2), qui relie d'abord l'un des deux processeurs (1, 2) à la mémoire (3), jusqu'à ce qu'il envoie à ce processeur (1, 2) un signal d'acquit d'accès de processeur, après quoi il relie l'autre processeur (2, 1), par l'intermédiaire d'un dispositif de connexion (6, 6a, 6b), à la mémoire (3), caractérisé en ce que le circuit de commande d'accès de processeur (7) est constitué par deux montages logiques identiques (14a, 14b) associés chacun à l'un des processeurs (1, 2), qui relient leur processeur (1, 2), de manière autonome, à la mémoire (3) et le déconnectent de la mémoire, et dont chacun, pendant la période de connexion de leur processeur (1, 2), bloque l'autre montage logique (14a, 14b) contre une liaison de la mémoire (3) avec son processeur (2, 1), chaque montage logique (14a, 14b) présentant un inverseur (15a, 15b) dont l'entrée est reliée à la ligne de signal de réquisition d'accès de processeur (8, 10) de son processeur (1, 2), ainsi qu'une porte NON-ET (16a, 16b) qui possède une première entrée, reliée à la sortie de l'inverseur (15a, 15b), et une seconde entrée, reliée à une source de signal logique interne (18a, 18b), et dont la sortie est reliée à la seconde entrée de l'autre montage logique (14a, 14b) concerné, et en ce que chaque montage logique (14a, 14b) présente une bascule (21a, 21b), qui est reliée par une entrée à la sortie de la porte NON-ET (16a, 16b) de ce montage logique (14a, 14b), tandis qu'elle connecte, par l'intermédiaire de sa sortie (25a, 25b), le processeur associé (1, 2) à la mémoire commune (3) ou l'en déconnecte, alors que pour le temps d'accès $T_S$ de la mémoire (3) on a la relation $T<T_R/2$, dans laquelle $T_R$ est le temps d'accès de chacun des deux processeurs (1, 2).

2. Coupleur de processeurs suivant la revendication 1, caractérisé en ce que le circuit de commande d'accès de processeur (7) raccorde un tampon de bus (6a, 6b) relié à chacun des deux processeurs (1, 2), alternativement à la mémoire (3).

3. Coupleur de processeurs suivant la revendication 1 ou 2, caractérisé en ce que le circuit de commande d'accès ds processeur (7) relie d'abord à la mémoire (3), le processeur (1, 2) dont le signal de réquisition d'accès de processeur lui parvient en premier lieu, et en ce que lors de l'apparition simultanée d'un signal de réquisition d'accès de processeur pour chacun, il décide de manière autonome lequel des deux processeurs (1, 2) il reliera d'abord à la mémoire (3).

4. Coupleur de processeurs suivant la revendication 1, caractérisé en ce que les deux bascules identiques (21a, 21b) forment conjointement en liaison avec le montage logique (14a, 14b), une bascule à trois états, dont les deux sorties (25a, 25b) ne peuvent prendre que trois des quatre combiaisons de signaux de sortie possibles.

5. Coupleur de processeurs suivant l'une des revendications 1 à 4, caractérisé en ce que chacun des deux calculateurs (1, 2), en particulier en tant que processeurs (36), est prévu sur une unité constructive de commande, en particulier une carte de commande (35) pour une commande numérique par ordinateur, le circuit de commande d'accès de processeur (7) et la mémoire (3), ainsi que le dispositif de connexion (6, 6a, 6b) du coupleur de processeurs (76) étant agencés soit sur l'une des deux unités constructives de commande, en particulier l'une des cartes de commande (35), soit répartis, en particulier en moitiés égales, sur les deux unités constructives de commande, en particulier sur les deux cartes de commande (35).

6. Coupleur de processeurs suivant la revendication 5 et l'une des revendications 1 ou 4, caractérisé en ce que chacun des deux montages logiques (14a, 14b) est agencé sur l'une des deux unités constructives de commande, en particulier une des deux cartes de commande (35).

7. Coupleur de processeurs suivant la revendication 5 ou 6, caractérisé en ce que l'unité de commande, en particulier la carte de commande (35), est destinée à une commande par ordinateur et comporte un système de réglage ou de régulation autonome commandé par son calculateur (1, 2), le calculateur étant alors en particulier un processeur (36) avec une ou plusieurs mémoires propres (59, 61) et l'unité de commande, en particulier la carte de commande (35), présentant de préférence des circuits d'entrée analogiques et numériques (50, 53, 56), ainsi qu'éventuellement des circuits de valeur instantanée et/ou nominale numériques et/ou analogiques (40, 41, 42), et éventuellement une ou plusieurs interfaces (63, 66, 69, 70) pour le raccordement à des dispositifs de traitement de données (65, 68) et des dispositifs de manipulation (72, 74, 75).

8. Coupleur de processeurs suivant l'une des revendications 5 à 7, caractérisé en ce que la carte de commande est une carte individuelle (35) pour une commande numérique par ordinateur à plusieurs axes de machines-outils ou robots industriels.

**Claims**

1. Computer coupling, comprising a first and second computer (1, 2) which can both be connected with a common memory (3), and a computer access guiding circuit (7), which is connected across a first computer access demand signal line (8) and a first computer access receipt signal line (9) to the first computer (1) and across a second computer access demand signal line (10) and a second computer access receipt signal line (11) to the second computer (2) and which first connect one of the two computers (1, 2) to the memory (3) during simultaneous or nearly simultaneous reception of each computer access demand signal from both computer (1, 2), until it delivers a computer access receipt signal to this computer (1, 2), after which it connects the other computer (2, 1) across a circuit device (6, 6a, 6b) to the memory (3), characterised in that the computer access control circuit (7) consists of two identical logic circuit arrangements (14a, 14b) each assigned to one of the computer (1, 2), which independently connect and disconnect their computer (1, 2) to or from the memory (3) and each of which bars the other logic circuit arrangement (14a, 14b) from a connection of the memory (3) with its computer (2, 1) during the switch-on period of its computer (2, 1), in which each logic circuit arrangement (14a, 14b) has an inverter (15a, 15b), whose input is connected to the computer access demand signal line (8, 10) of its computer (1, 2), and a NAND gate (16a, 16b), that has a first input connected to the output of the inverter (15a, 15b) and a second input connected to an internal logic signal source (18a, 18b) and whose output is connected to the second output of the other logic circuit arrangement (14a, 14b) at any one time, and that each logic circuit arrangement (14a, 14b) has a flip-flop (21a, 21b) connected at one of its inputs to the output of the NAND gate (16a, 16b) of this logic circuit arrangement (14a, 14b) while it connects or disconnects the computer (1, 2) assigned to or from the common memory (3) across its output (25a, 25b), where the relation $T_S < T_R/2$ holds for the access time $T_S$ of the memory (3), in which $T_R$ is the access time of each of the two computers (1, 2).

2. Computer coupling according to claim 1, characterized in that the computer access control circuit (7) alternately connects to the memory (3) one of the bus buffers (6a, 6b) each connected to one of the two computer (1, 2) at any one time.

3. Computer coupling according to claim 1 or 2, characterised in that the computer access guiding circuit (7) at any time first connects the computer (1, 2) to the memory (3) whose computer access demand signal it first receives and that it decides autonomously, in case of a simultaneous arrival of one of each of the computer access demand signals which of the two computers (1, 2) it will first connect to the memory (3).

4. Computer coupling according to claim 1, characterised in that both of the identical flip-flops (21a, 21b) form a three-state flip-flop in connection with the logic circuit arrangement (14a, 14b), whose two outputs (25a, 25b) can only have 3 or 4 possible output signal combinations.

5. Computer coupling according to one of claims 1 to 4, characterised in that each of the two computers (1, 2) is provided as a control element, especially a pilot card, (35) for computerized numerical control especially as processors (36), where the computer access control circuit (7) and the memory (3, 77) and the circuit device (6, 6a, 6b) of the computer coupling (76) are arranged either each on one of the two control elements, in particular one of the two pilot cards (35), or assigned, in particular in equal halves, to both control elements, in particular to both pilot cards (35).

6. Computer coupling according to claim 5 and one of claims 1 or 4, characterised in that each of the two logic circuit arrangements (14a, 14b) is arranged on one of both control elements, in particular one of both pilot cards (35).

7. Computer coupling according to claim 5 or 6, characterised in that the control element, in particular the pilot card (35), is of such a kind for the purpose of computerised control which comprises an independent control or regulating system controlled by its computer (1, 2), where in particular the computer is a processor (36) with one or more of its own memories (59, 61) and the control element, in particular the pilot card (35), has preferably analogue and digital input circuits (50, 53, 56) and possibly digital and/or analogue Actual and/or Target value circuits (40, 41, 42) and possibly one or more interfaces (63, 66, 69, 70) for connecting to data processing devices (65, 68) and servicing data (72, 74, 75).

8. Computer coupling according to one of claims 5 to 7, characterised in that the pilot card is a single card (35) for multi-access computerised numerical control of machine tools or industrial robots.

FIG.1

SPEICHER

RECHNER B

RECHNER A

RECHNER-
ZUGRIFFS-
STEUER-
SCHALTUNG

FIG.2

**FIG. 3**

Prozessor MC 68000 8 (12) MHz — 36

— 35

2 digitale Istwertkreise (Handrad) — 42

Systemspeicher 80 KB EPROM 4 KB CMOS — 59

Erweiterung auf 27128 und 27256 — 60

4 digitale Istwertkreise — 40

Lageregelkreis — 44

8 analoge Sollwertkreise — 45

Anwenderspeicher 4-28 KB CMOS — 61

Wahlweise mit EPROM bestückbar — 62

3 serielle E/A V 24 und 20 mA — 63

DNC Terminal Kassette — 65

64 digitale 24 V-Eingänge — 51

Integrierte SPS — 49

48 digitale 24 V-Ausgänge (0,5 A) — 54

10 Bit parallel TTL E/A — 66

Video-Interface 512 × 512 Pkt. — 69

16 analoge Eing. 8 Bit Auflösung (Sensoren) — 57

Tastatur Interface 64 Tasten — 70

Bedientafel — 75

Buser-weiterung — 78

Rechnerkopplung 2. Karte SPEICHER — 76, 77

80

X Y Z

Mo — 58

+ 5V
+15V
−15V

47, 48, 39, 38, 43, 46, 41, 52, 50, 53, 55, 56, 64, 67, 68, 71, 72, 73, 74, 37